# EUROPÄISCHE PATENTANMELDUNG

(11) **EP 2 146 068 A1**
(43) Veröffentlichungstag der Anmeldung: **20.01.2010**
(21) Anmeldenummer: 09165439.2
(22) Anmeldetag: 14.07.2009
(51) Int. Cl.: F01N 13/00

(54) **Anordnung mit Zylinderkopf und Turbine**

(30) Priorität: 14.07.2008 DE 102008033043; 08.08.2008 DE 102008036945
(71) Anmelder: Ford Global Technologies, LLC, A subsidary of Ford Motor Company, Dearborn, MI 48126 (US)
(72) Erfinder: Kuhlbach, Kai, 51427, Bergisch Gladbach (DE)
(74) Vertreter: Drömer, Hans-Carsten

(57) **Zusammenfassung**

Die Erfindung betrifft eine Brennkraftmaschine mit einem Zylinderkopf, der mindestens einen integrierten Abgaskrümmer zum Abführen von Abgasen über eine aus dem Zylinderkopf austretende Gesamtabgasleitung aufweist, und einer Turbine, die ein um eine Drehachse drehbares Laufrad und einen Eintrittsbereich zum Zuführen der Abgase aufweist, bei der die Turbine mit dem Zylinderkopf so verbunden ist, daß der Eintrittsbereich an die Gesamtabgasleitung anschließt.

## Beschreibung

Die Erfindung betrifft eine Brennkraftmaschine mit einem Zylinderkopf, der mindestens einen integrierten Abgaskrümmer zum Abführen von Abgasen über eine aus dem Zylinderkopf austretende Gesamtabgasleitung aufweist, und einer Turbine, die ein um eine Drehachse drehbares Laufrad und einen Eintrittsbereich zum Zuführen der Abgase aufweist, bei der die Turbine mit dem Zylinderkopf so verbunden ist, daß der Eintrittsbereich an die Gesamtabgasleitung anschließt.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen verfügen über einen Zylinderblock und einen Zylinderkopf, die zur Ausbildung der einzelnen Zylinder d. h. Brennräume miteinander verbunden werden.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient häufig auch zur Aufnahme des Ventiltriebs. Um den Ladungswechsel zu steuern, benötigt eine Brennkraftmaschine Steuerorgane und Betätigungseinrichtungen zur Betätigung dieser Steuerorgane. Im Rahmen des Ladungswechsels erfolgt das Ausschieben der Verbrennungsgase über die Auslassöffnungen und das Füllen des Brennraums d. h. das Ansaugen des Frischgemisches bzw. der Frischluft über die Einlassöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslassöffnungen freigeben und verschließen. Der für die Bewegung der Ventile erforderliche Ventilbetätigungsmechanismus einschließlich der Ventile selbst wird als Ventiltrieb bezeichnet.

Nach der US 5095704 wird der Abgaskrümmer vollständig im Zylinderkopf integriert. Ein derartiger Zylinderkopf zeichnet sich gegenüber einer Ausführung mit einem außerhalb des Zylinderkopfes gelegenen Abgaskrümmer durch eine vergleichsweise kompakte Bauweise aus.

Aus der EP 1536141 ist bekannt, ein Gehäuse für eine Turbine eines Abgasturboladers einstückig mit dem in den Zylinderkopf integrierten Abgaskrümmer auszubilden.

Aufgabe der Erfindung ist es, die Gesamtwegstrecke der Abgasleitungen des Abgaskrümmers und das Volumen der Abgasleitungen stromaufwärts der Turbine weiter zu minimieren und dabei nicht nur eine geringere Anzahl an Bauteilen sondern auch eine noch kompaktere Bauweise der Antriebseinheit zu ermöglichen. Außerdem soll die Abgasenthalpie der heißen Abgase, die maßgeblich vom Abgasdruck und der Abgastemperatur bestimmt wird, optimal genutzt werden und ein schnelles Ansprechverhalten des Abgasturboladers zu erreichen.

Stromabwärts des Krümmers und der Turbine werden die Abgase einem oder mehreren Abgasnachbehandlungssystemen zugeführt. Aufgabe der Erfindung ist deshalb auch, dafür zu sorgen daß die Abgasnachbehandlungssysteme möglichst schnell ihre Betriebstemperatur bzw. Anspringtemperatur erreichen, insbesondere nach einem Kaltstart der Brennkraftmaschine.

Aufgabe der Erfindung ist es ferner das Gewicht der Brennkraftmaschine, und der angeschlossenen Aggregate und deren Kosten zu vermindern.

Diese Aufgaben werden durch eine Brennkraftmaschine gemäß Anspruch 1 gelöst.

Die erfindungsgemäße Brennkraftmaschine weist einen Zylinderkopf auf, der mindestens einen integrierten Abgaskrümmer zum Abführen von Abgasen über eine aus dem Zylinderkopf austretende Gesamtabgasleitung enthält, an die, in Strömungsrichtung fluchtend, der Eintrittsbereich mindestens einer Turbine eines Abgasturboladers möglichst unmittelbar anschließt. Das im folgenden Gesagte bezieht sich auf die Ausgestaltung der Brennkraftmaschine mit einer Turbine. Ausgestaltungen mit zwei oder mehr Turbinen oder mit zweiflutigen Turbinen sind ebenfalls Gegenstand dieser Erfindung.

Der Schwerpunkt der mindestens einen Turbine weist erfindungsgemäß einen geringstmöglichen Abstand zum Zylinderkopf auf.

Bevorzugt soll der Eintrittsbereich der schneckenförmigen Luftführung zur Turbine ohne weiteres Zwischenstück mit der Gesamtabgasleitung verbunden sein.

Weiter bevorzugt bildet dieser Eintrittsbereich der Turbine einen integralen Teil der Gesamtabgasleitung.

Weiter bevorzugt verläuft die Turbinenachse etwa parallel zur Längsachse des Zylinderkopfes und ist oberhalb der Gesamtabgasleitung angeordnet. Zusätzlich wird die dem Zylinderkopf zugewandte Außenwand des Turbinengehäuses möglichst nah der Stelle bzw. dem Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle zusammenlaufen. Als Stromfäden sind hier etwa die Mittellinien der der von den Zylindern kommenden flüssigkeitsgekühlten Abgaskanäle anzusehen.

Mit dem Turbinengehäuse rücken die Turbinenachse und das Turbinenrad und damit der Turbinenschwerpunkt möglichst nah an den Zylinderkopf.
Bevorzugt ist der Abstand zwischen Turbinenachse und der Stelle, an der die Stromfäden der von den Zylindern kommenden flüssigkeitsgekühlten Abgaskanäle zusammenlaufen etwa so groß wie der Turbinenradradius. Weiter bevorzugt ist der Abstand zwischen Turbinenachse und der Stelle, an der die Stromfäden der von den Zylindern kommenden flüssigkeitsgekühlten Abgaskanäle zusammenlaufen nicht größer als der doppelte Turbinenraddurchmesser.

Durch die erfindungsgemäße Ausführung wird das Gehäuse kleinvolumiger, benötigt entsprechend weniger Bauraum, was ein dichtes Packaging ermöglicht, und weist ein geringeres Gewicht auf. Infolge des geringeren Materialbedarfs sinken auch die Herstellungskosten. Ein gegebenenfalls vorgesehenes Hitzeschild kann entsprechend dem kleineren Turbinengehäuse ebenfalls kleiner dimensioniert werden oder ganz entfallen.

Die Turbine kann mit einer variablen Turbinengeometrie ausgestattet werden, die eine weitergehende Anpassung an den jeweiligen Betriebspunkt der Brennkraftmaschine durch Verstellen der Turbinengeometrie bzw. des wirksamen Turbinenquerschnittes gestattet. Alternativ oder zusätzlich kann eine Leitung vorgesehen werden, mit der bei Umgehung der Turbine Abgas abgeblasen wird.

Vorteilhaft sind Ausführungsformen der Turbine, bei denen stromaufwärts des Laufrades Leitschaufeln zur Beeinflussung der Strömungsrichtung angeordnet sind. Im Gegensatz zu den Laufschaufeln des umlaufenden Laufrades rotieren die Leitschaufeln nicht mit der Welle der Turbine mit.

Verfügt die Turbine über eine feste unveränderliche Geometrie, sind die Leitschaufeln nicht nur stationär, sondern zudem völlig unbeweglich d. h. starr fixiert. Wird hingegen eine Turbine mit variabler Geometrie eingesetzt, sind die Leitschaufeln zwar auch stationär angeordnet, aber nicht völlig unbeweglich, sondern um ihre Achse drehbar angeordnet, so dass auf die Anströmung der Laufschaufeln Einfluß genommen werden kann.

Vorteilhaft sind Ausführungsformen des Zylinderkopfes, bei denen zunächst die Abgasleitungen der mindestens zwei Auslaßöffnungen je Zylinder zu einer dem Zylinder zugehörigen Teilabgasleitung zusammenführen, bevor diese Teilabgasleitungen zu der Gesamtabgasleitung zusammenführen. Die Abgase der einzelnen Auslassöffnungen werden durch Abgasleitungen geführt, die sich überwiegend innerhalb des Zylinderkopfes zu bevorzugt einer Gesamtabgasleitung vereinigen. wobei die im Zylinderkopf vorgesehenen Abgaswege durch in der Nähe dieser Abgaswege vorgesehene Kühlmittelkanäle flüssigkeitsgekühlt werden. Ein am Zylinderkopf integrierter, hervorragender Bereich wird ebenfalls flüssigkeitsgekühlt und dient im wesentlichen der Gewicht sparenden Ausbildung einer Anschlussfläche für eine erste abgasdurchströmten Einrichtung, z. B. einen Abgasturbolader. Der hervorragende Bereich kann zur verstärkten Flüssigkeitskühlung auch weniger stark hervorragen, insbesondere etwa fluchtend mit der Zylinderkopfaußenwand ausgebildet sein.

Durch die erfindungsgemäße Anordnung der Turbinenachse über dem Eintrittsbereich des Turbinengehäuses bzw. der damit in Strömungsrichtung fluchtenden Gesamtabgasleitung, welche selbst von den darunterliegenden stromaufwärtigen Teilabgasleitungen der Ventile gespeist wird ergibt sich eine Umkehr der Strömungsrichtung. Ausgehend von den Ventilen, wird das Abgas in den darüberliegenden Teilabgasleitungen in eine erste Strömungsrichtung (z.B. linksdrehend) zu Gesamtabgasleitung hin gelenkt. Von dieser gelangt das Abgas in die weiter darüberliegende Schnecke des Turbinengehäuses, welche eine der ersten Strömungsrichtung entgegen gesetzte Richtung (z. B. rechtsdrehend) aufweist. Dadurch kann der Druckverlust in der Abgasströmung bis zum Eintritt in die Turbine vermindert werden. Dies ist sowohl auf die verbesserte Strömungsführung als auch eine weitestgehende Verkürzung der zu überbrückenden Wegstrecke d. h. der relevanten Abgasleitungen zurückzuführen.

Bei einem Abgasturbolader sind ein Verdichter und eine Turbine auf derselben Welle angeordnet. Der heiße Abgasstrom wird der Turbine zugeführt und entspannt sich unter Energieabgabe in dieser Turbine, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder bzw. der Brennkraftmaschine erreicht wird.

Die Aufladung dient in erster Linie der Leistungssteigerung der Brennkraftmaschine. Die für den Verbrennungsprozess benötigte Luft wird dabei verdichtet, wodurch jedem Zylinder pro Arbeitsspiel d. h. pro Arbeitsprozess eine größere Luftmasse zugeführt werden kann. Dadurch können die Kraftstoffmasse und damit der Mitteldruck pₘₑ gesteigert werden.

Vorteilhaft wird die verdichtete Luft einem Einlasskanal zugeführt, der in den Zylinderkopf integriert ist

Die Aufladung ist daher ein geeignetes Mittel, bei unverändertem Hubraum die Leistung einer Brennkraftmaschine zu steigern oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist.

Grundsätzlich können zur Verbesserung der Drehmomentcharakteristik der Brennkraftmaschine auch mehrere Turbolader eingesetzt werden, deren Turbinen bzw. Verdichter in Reihe bzw. parallel angeordnet sind.

Vorteilhaft sind Ausführungsformen der Anordnung, bei denen die Turbine eine Radialturbine ist. Bei einer Radialturbine erfolgt die Anströmung der Laufschaufeln des Laufrades im Wesentlichen radial d. h. die Geschwindigkeitskomponente in radialer Richtung ist größer als die axiale Geschwindigkeitskomponente. Der Geschwindigkeitsvektor der Strömung schneidet die Welle der Turbine in einem rechten Winkel, falls die Anströmung exakt radial verläuft.

Um die Laufschaufeln radial anströmen zu können, wird die Zuführung des Abgases vorzugsweise als rundum verlaufendes Spiral- oder Schneckengehäuse ausgebildet, so dass die Anströmung des Abgases zum Turbinenlaufrad radial erfolgt.

Vorteilhaft sind aber auch Ausführungsformen der Anordnung, bei denen die Turbine eine Axialturbine ist. Bei einer Axialturbine erfolgt die Anströmung der Laufradschaufeln im Wesentlichen axial d. h. die Geschwindigkeitskomponente in axialer Richtung ist größer als die radiale Geschwindigkeitskomponente. Der Geschwindigkeitsvektor der Anströmung im Bereich des Laufrades verläuft parallel zur Welle der Turbine, falls die Anströmung exakt axial verläuft.

Die Zuführung des Abgases erfolgt auch bei Axialturbinen häufig mittels Spiral-oder Schneckengehäuse. Grundsätzlich besteht aber bei Axialturbinen die Möglichkeit, das Abgas axial zuzuführen, so dass keine Umlenkung bzw. Richtungsänderung des Abgases stromaufwärts des Laufrades vorgenommen wird bzw. vorgenommen werden muß, was - wie oben beschrieben - unter energetischen Aspekten Vorteile bietet, weil damit ein möglichst energiereicher Abgasstrom an der Turbine bereitgestellt wird.

Infolge der Integration mindestens eines Abgaskrümmers ist der erfindungsgemäße Zylinderkopf thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem Kühlmittelmantel d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so daß es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Vorteilhaft sind aus den zuvor genannten Gründen Ausführungsformen der Anordnung, bei denen der Zylinderkopf mit einem Kühlmittelmantel ausgestattet ist.

Vorteilhaft sind dabei Ausführungsformen des Zylinderkopfes, bei denen der Kühlmittelmantel einen unteren Kühlmittelmantel, der zwischen dem integrierten Abgaskrümmer und einer Montage-Stirnseite des mindestens einen Zylinderkopfes, an der dieser Zylinderkopf mit einem Zylinderblock verbindbar ist, angeordnet ist, und einen oberen Kühlmittelmantel, der auf der dem unteren Kühlmittelmantel gegenüberliegenden Seite des Abgaskrümmers angeordnet ist, aufweist, und
beabstandet zum Abgaskrümmer an der den Zylindern abgewandten Seite des Abgaskrümmers in einer Außenwandung des Zylinderkopfes, aus der die Gesamtabgasleitung austritt, mindestens eine Verbindung zwischen dem unteren Kühlmittelmantel und dem oberen Kühlmittelmantel vorgesehen ist, die dem Durchtritt von Kühlmittel dient, wobei die mindestens eine Verbindung benachbart zu dem Bereich angeordnet ist, in dem die Abgasleitungen zu der Gesamtabgasleitung zusammenführen.

Damit ist im Zylinderkopf mindestens eine Verbindung der Kühlmittelmäntel auf der den Zylindern des Zylinderkopfes abgewandten Seite des integrierten Abgaskrümmers angeordnet. Die mindestens eine Verbindung liegt somit außerhalb des integrierten Abgaskrümmers. Bei der Verbindung handelt es sich um einen Kühlmittelkanal.

Bevorzugt ist im Turbinengehäuse ein Kühlmantel angeordnet, welcher mit einer Kühlmittelpumpe verbindbar ist.
Weiter bevorzugt führt die Verbindung mit der Kühlmittelpumpe über wenigstens eine der Kühlmittelmäntel des Zylinderkopfes.

Im Folgenden wird die Erfindung anhand eines Ausführungsbeispieles gemäß den Figuren näher beschrieben. Hierbei zeigt:
- Fig. 1a: schematisch in einer Seitenansicht eine erste Ausführungsform der Anordnung mit Zylinderkopf und Turbine, und
- Fig. 1b: schematisch die in Figur 1a dargestellte Ausführungsform in einer um 90 Grad gedrehten Ansicht, und
- Fig. 2: eine perspektivische Ansicht eines erfindungsgemäßen Zylinderkopfes mit einem integrierten Abgaskrümmer, teilweise in Schnittdarstellung.

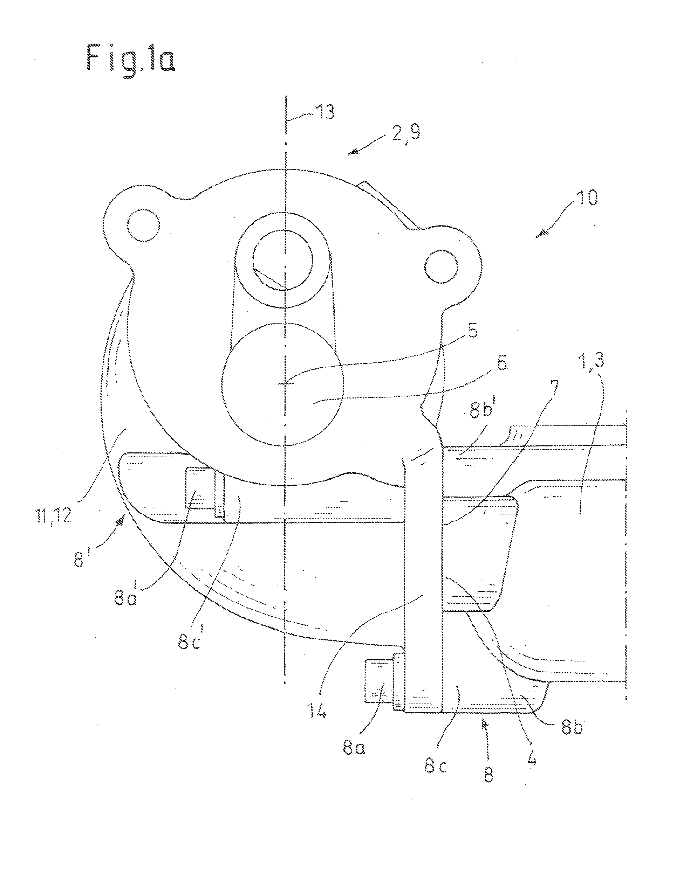

Figur 1a zeigt schematisch in einer Seitenansicht eine erste Ausführungsform der Anordnung 10 mit Zylinderkopf 1 und Turbine 2.

Der Zylinderkopf 1 verfügt über einen integrierten Abgaskrümmer 3 zum Abführen von Abgasen über eine aus dem Zylinderkopf 1 austretende Gesamtabgasleitung 4. Die Turbine 2 weist einen Eintrittsbereich 7 zum Zuführen der Abgase auf, wobei der Eintrittsbereich 7 unmittelbar an die Gesamtabgasleitung 4 anschließt.

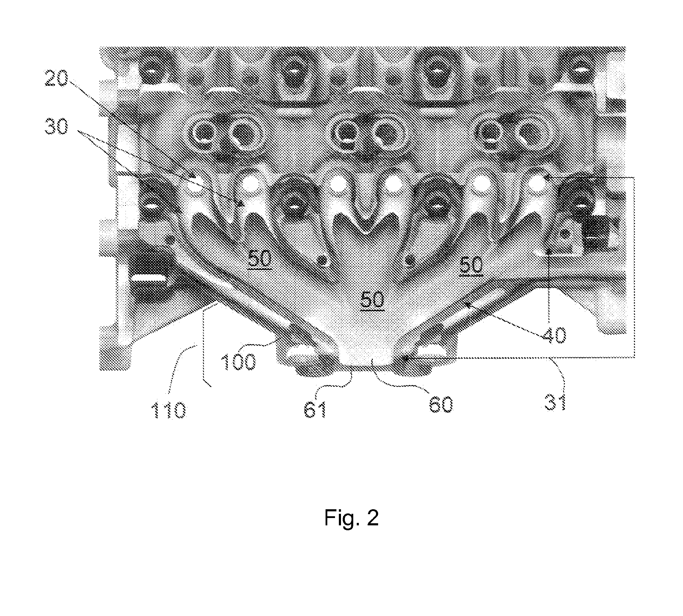

Etwa im Bereich des Übergangs von Abgaskrümmer 3 zur Gesamtabgasleitung (4) ist die Stelle bzw. der Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle (s. Fig. 2, Zf. 50) zusammenlaufen. Als Stromfäden sind hier etwa die Mittellinien der der von den Zylindern kommenden flüssigkeitsgekühlten Abgaskanäle (s. Fig. 2, Zf. 50) anzusehen. In dem Ausführungsbeispiel entspricht der Abstand der Turbinenachse 5 zu der Stelle, an der die Stromfäden der von den Zylindern kommenden flüssigkeitsgekühlten Abgaskanäle (s. Fig. 2, Zf. 50) zusammenlaufen etwa dem Durchmesser der Turbine. Die dem Zylinderkopf zugewandte Außenwand des Turbinengehäuses - etwa über der Bohrung 8b' - grenzt tangential an eine durch die Montagefläche des Flansches 14 gedachte, etwa senkrecht auf den Schraubenverbindungen 8, 8' stehende Ebene. Damit ist die dem Zylinderkopf zugewandte Außenwand des Turbinengehäuses näher an der Stelle, an der die Stromfäden der von den Zylindern kommenden flüssigkeitsgekühlten Abgaskanäle (s. Fig. 2, Zf. 50) zusammenlaufen.

Ausgehend vom Eintrittsbereich 7 wird das Abgas via Spiralgehäuse 12 dem stromabwärts angeordneten und um eine Drehachse 5 drehbar gelagerten Laufrad 6 (nur ausschnittsweise dargestellt) der Turbine 2 zugeführt. Die Turbine 2 ist eine Radialturbine 9.

Drei Schraubenverbindungen 8, 8' dienen dazu, die Turbine 2 mit dem Zylinderkopf 1 zu verbinden, wobei eine Schraubenverbindung 8' auf der dem Laufrad 6 zugewandten Seite des Eintrittsbereichs 7 und zwei Schraubenverbindungen 8 auf der dem Laufrad 6 abgewandten Seite des Eintrittsbereichs 7 vorgesehen sind.

Zur Ausbildung der drei Schraubenverbindungen 8, 8' mittels Schrauben 8a, 8a' weist der Zylinderkopf 1 drei um die Gesamtabgasleitung 4 herum und zur Gesamtabgasleitung 4 beabstandet angeordnete Bohrungen 8b, 8b' zur Aufnahme der Schrauben 8a, 8a' auf. Die Turbine 2 verfügt über drei um den Eintrittsbereich 7 herum angeordnete Butzen 8c, 8c' zum Durchführen der Schrauben 8a, 8a'. Das Turbinengehäuse 11 der Turbine 2 ist in der Nähe des Eintrittsbereichs 7 mit einem Flansch 14 ausgestattet, um die Butzen 8c, 8c' aufzunehmen bzw. auszubilden.

Die Butze 8c' der Schraubenverbindung 8', die auf der dem Laufrad 6 zugewandten Seite des Eintrittsbereichs 7 vorgesehen ist, ragt über die Drehachse 5 des Laufrades 6 hinaus nach außen hervor. D. h. das freie Ende dieser Butze 8c' liegt auf der dem Zylinderkopf 1 abgewandten Seite einer gedachten Ebene 13, welche durch die Drehachse 5 des Laufrades 6 der Turbine 2 geht und senkrecht auf den Schraubenverbindungen 8, 8' steht.

Dadurch rückt auch der Schraubenkopf dieser Schraubenverbindung 8' weiter nach außen und vom Eintrittsbereich 7 bzw. Zylinderkopf 1 weg. Zum Festziehen der dazugehörigen Schraube 8a' muß das Montagewerkzeug nicht mehr bis in die Nähe des Eintrittsbereichs 7 bzw. des Zylinderkopfes 1 eingeführt werden, um mit der Schraube 8a' in Eingriff gebracht zu werden.

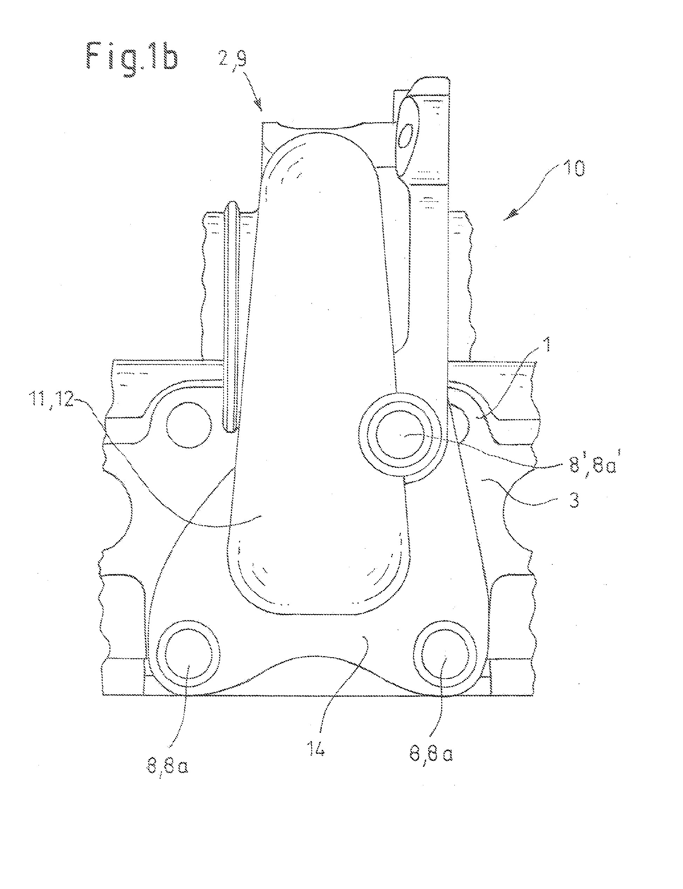

Figur 1b zeigt schematisch die in Figur 1a dargestellte Ausführungsform in einer um 90 Grad gedrehten Ansicht. Für dieselben Bauteile wurden dieselben Bezugszeichen verwendet, weshalb auch auf Figur 1a Bezug genommen wird.

Die erfindungsgemäße Motoranordnung mit einer Brennkraftmaschine weist einen Zylinderblock mit wenigstens zwei Zylindern auf, wobei jeder Zylinder wenigstens wie in Fig. 2 dargestellt eine durch ein Auslassventil selektiv verschließbare Auslassöffnung 20 zur Abführung der Abgase aufweist. Die Abgase der einzelnen Auslassöffnungen 20 werden durch Abgasleitungen 30 geführt, die sich überwiegend innerhalb des Zylinderkopfes 100 zu bevorzugt einer Gesamtabgasleitung 60 vereinigen. wobei die im Zylinderkopf 100 vorgesehenen Abgaswege durch in der Nähe dieser Abgaswege vorgesehene Kühlmittelkanäle 40 flüssigkeitsgekühlt werden.

Etwa im Bereich des Übergangs der den Abgaskrümmer (s. Fig. 1a, Zf. 3) bildenden flüssigkeitsgekühlten Abgaskanäle (50) zur Gesamtabgasleitung 60 (s. Fig. 1a, Zf. 4) ist die Stelle bzw. der Bereich angeordnet, in dem die Abgasleitungen zu der Gesamtabgasleitung zusammenführen. Dies ist im Wesentlichen die Stelle, an der die Stromfäden der von den Zylindern kommenden flüssigkeitsgekühlten Abgaskanäle 50 zusammenlaufen. Als Stromfäden sind hier etwa die Mittellinien der der von den Zylindern kommenden flüssigkeitsgekühlten Abgaskanäle 50 anzusehen.

Der am Zylinderkopf integrierte, hervorragende Bereich 110 wird ebenfalls flüssigkeitsgekühlt und dient im wesentlichen der Gewicht sparenden Ausbildung einer Anschlussfläche für eine erste abgasdurchströmten Einrichtung. Der Bereich 110 kann zur verstärkten Flüssigkeitskühlung auch weniger stark hervorragen, insbesondere etwa fluchtend mit der Zylinderkopfaußenwand ausgebildet sein. Die Gesamtabgasleitung 60 geht außerhalb des Zylinderkopfes 100 in eine erste abgasdurchströmte Einrichtung über. Zur Optimierung von schneller Aufheizung der ersten abgasdurchströmte Einrichtung, welch hier beispielhaft als Turbolader dargestellt ist, und in Verbindung damit zur Absenkung von dessen maximalen Betriebstemperatur ist als Verhältnis der Flächensumme der Innenwandungen 50 der flüssigkeitsgekühlten Abgaswege im Zylinderkopf 100, gemessen von den Auslassöffnungen 20 bis zum Austritt 61 der bevorzugt einen Gesamtabgasleitung 60 aus dem Zylinderkopf 100, bezogen auf die Flächensumme der Innenwandungen der Abgaswege 50, gemessen von den Auslassöffnungen 20 bis zu einem Bezugselement der ersten abgasdurchströmten Einrichtung außerhalb des Zylinderkopfes, auf einen Wert ausgelegt, der mehr als 50%, bevorzugt mehr als 65%, besonders bevorzugt mehr als 80% und ganz besonders bevorzugt mehr als 85% beträgt. Die Innenwandungen 50 der flüssigkeitsgekühlten Abgaswege im Zylinderkopf 100, von den Auslassöffnungen 20 bis zum Austritt 61 der bevorzugt einen Gesamtabgasleitung 60 aus dem Zylinderkopf 100 werden als integrierter Abgaskrümmer 31 bezeichnet.

Im Fall des beispielhaft dargestellten Turboladers ist das Bezugselement zu Bestimmung dieses Flächenverhältnisses der Anfangsbereich des Spiralgehäuses 120, also die Kontur, die den Übergang des Eintrittsbereichs 70 in das Spiralgehäuse darstellt.

## Patentansprüche

1. Brennkraftmaschine mit einem Zylinderkopf (1), der mindestens einen integrierten Abgaskrümmer (3) zum Abführen von Abgasen über eine aus dem Zylinderkopf (1) austretende Gesamtabgasleitung (4) aufweist, und mindestens einer Turbine (2), die ein um eine Drehachse (5) drehbares Laufrad (6) und einen Eintrittsbereich (7) zum Zuführen der Abgase aufweist, wobei Gesamtabgasleitung (4) und Eintrittsbereich (7) in Strömungsrichtung fluchtend angeordnet sind
**dadurch gekennzeichnet, daß** der Schwerpunkt der Turbine(n) (2) einen geringstmöglichen Abstand zum Zylinderkopf aufweist.

2. Brennkraftmaschine nach Anspruch 1, **dadurch gekennzeichnet, daß** der Eintrittsbereich (7) der Turbine (2) ein integraler Teil der Gesamtabgasleitung ist.

3. Brennkraftmaschine nach Anspruch 1 oder 2, **dadurch gekennzeichnet, daß** die Turbinenachse (5) der Turbine (2) etwa parallel zur Längsachse des Zylinderkopfes (1) ist und oberhalb der Gesamtabgasleitung (4) angeordnet ist.

4. Brennkraftmaschine nach einem der vorherigen Ansprüche, **dadurch gekennzeichnet, daß** die dem Zylinderkopf (1) zugewandte Außenwand des Turbinengehäuses (11, 12) möglichst nah der Stelle angeordnet, an der die Stromfäden der von den Zylindern kommenden Strömungen in den flüssigkeitsgekühlten Abgaskanälen (50) zusammenlaufen.

5. Brennkraftmaschine nach Anspruch 3, **dadurch gekennzeichnet, daß** der Abstand zwischen Turbinenachse (5) und der Stelle, an der die Stromfäden der von den Zylindern kommenden Strömungen in den flüssigkeitsgekühlten Abgaskanälen (50) zusammenlaufen, etwa so groß wie der Turbinenradradius ist.

6. Brennkraftmaschine nach Anspruch 5, **dadurch gekennzeichnet, daß** der Abstand zwischen Turbinenachse (5) und der Stelle, an der die Stromfäden der von den Zylindern kommenden Strömungen in den flüssigkeitsgekühlten Abgaskanälen (50) zusammenlaufen, kleiner als der doppelte Turbinenradradius ist.

7. Brennkraftmaschine nach einem der vorherigen Ansprüche, **dadurch gekennzeichnet, daß** der Zylinderkopf (1) einen unteren Kühlmittelmantel aufweist, der zwischen dem integrierten Abgaskrümmer (4) und einer Montage-Stirnseite angeordnet ist, an der dieser Zylinderkopf (1) mit einem Zylinderblock verbindbar ist, und einen oberen Kühlmittelmantel aufweist, der auf der dem unteren Kühlmittelmantel gegenüberliegenden Seite des Abgaskrümmers (3) angeordnet ist und mindestens eine Verbindung zwischen dem unteren Kühlmittelmantel und dem oberen Kühlmittelmantel vorgesehen ist.

8. Brennkraftmaschine nach Anspruch 7, **dadurch gekennzeichnet, daß** die mindestens eine Verbindung zwischen oberem und unterem Kühlmittelmantel benachbart zu dem Bereich angeordnet ist, in dem die Abgasleitungen zu der Gesamtabgasleitung zusammenführen.

9. Brennkraftmaschine nach einem der vorherigen Ansprüche, **dadurch gekennzeichnet, daß** im Turbinengehäuse (11, 12) ein Kühlmantel angeordnet ist, welcher mit einer Kühlmittelpumpe verbindbar ist.

10. Brennkraftmaschine nach Anspruch 9, **dadurch gekennzeichnet, daß** die Verbindung mit der Kühlmittelpumpe über wenigstens eine der Kühlmittelmäntel des Zylinderkopfes führt.
